# EUROPÄISCHE PATENTANMELDUNG

(11) **EP 3 904 221 A1**
(43) Veröffentlichungstag der Anmeldung: **03.11.2021**
(21) Anmeldenummer: 20172512.4
(22) Anmeldetag: 30.04.2020
(51) Int. Cl.: B65B 1/40, B65B 1/12, B65B 37/10, B65B 59/04, B65G 33/14, B65G 65/46, B65G 33/26

(54) **DOSIERVORRICHTUNG UND VERFAHREN ZUM BETRIEB EINER DOSIERVORRICHTUNG**

(71) Anmelder: Harro Höfliger Verpackungsmaschinen GmbH, 71573 Allmersbach im Tal (DE)
(72) Erfinder: Lober, Martin, 71573 Allmersbach im Tal (DE); Schröppel, Peter, 71573 Allmersbach im Tal (DE); Wolf, Achim, 71573 Allmersbach im Tal (DE); Seyfang, Karlheinz, 71573 Allmersbach im Tal (DE); Blum, Uwe, 71540 Murrhardt (DE)
(74) Vertreter: Zurhorst, Stefan

(57) **Zusammenfassung**

Die Erfindung betrifft eine Dosiervorrichtung für rieselfähiges Material (1) sowie ein Verfahren zum Betrieb einer solchen Dosiervorrichtung. Die Dosiervorrichtung umfasst einen Dosierkanal (2) mit einem geschlossenen Querschnitt, und umfasst des Weiteren einen Drehantrieb (M). Der Dosierkanal (2) ist in Form einer Schraube mit einer vertikalen Längsachse (3) gewunden. Das rieselfähige Material (1) wird dem Dosierkanal (2) zugeführt. Der Dosierkanal (2) wird mittels des Drehantriebes (M) in eine schwingende Drehbewegung um seine Längsachse (3) mit einzelnen Drehhüben (9) versetzt, wobei mit jedem Drehhub (9) eine Teilmenge des rieselfähigen Materials (1) aus einer unteren Austrittsöffnung (7) des Dosierkanals (2) herausfällt.

## Beschreibung

Die Erfindung betrifft eine Dosiervorrichtung für rieselfähiges Material, insbesondere für pharmazeutisches Pulver, Granulat, Mikrotabletten oder dergleichen sowie ein Verfahren zum Betrieb einer solchen Dosiervorrichtung.

Insbesondere im pharmazeutischen Bereich werden Pulver, Granulate, Mikrotabletten oder anderes rieselfähiges Material verarbeitet, wobei Zielbehälter wie Steckkapseln, Blisterverpackungen oder dergleichen mit einer bestimmten Zielmenge zu befüllen sind. Die Dosierung solcher Zielmengen ist eine wichtige Aufgabe, bei der es auf hohe Wiederholgenauigkeit unter industriellen Einsatzbedingungen ankommt. Die in Frage kommenden Materialien unterscheiden sich jedoch deutlich in ihren Eigenschaften, so dass je nach zu dosierendem Material unterschiedliche Dosiersysteme und Verfahren zum Einsatz kommen.

Verbreitete Anwendung finden Schneckendosierer oder Schieberdosierer. Im Falle des Schneckendosierers dreht sich eine Dosierschnecke in einem Umgebungsgehäuse, wodurch das Material gefördert und dosiert wird. Im Falle des Schieberdosierers enthält ein linear beweglicher Schieber eine hinsichtlich ihres Volumens exakt bemessene Dosieröffnung, die in einer Schiebestellung mit dem zu dosierenden Material befüllt und in einer anderen Schiebestellung in den Zielbehälter entleert wird. Es wurde jedoch beobachtet, dass die Verwendung solcher Dosiersysteme insbesondere bei empfindlichen Materialien wie Granulat, geschmacksmaskierte Pulver oder dergleichen zu Qualitätseinbußen und außerdem zu einer unerwünschten Staubentwicklung führen kann. Die Verwendung unter abgeschlossenen Containment-Bedingungen sowie Wartungs- und Reinigungsarbeiten sind schwierig.

Der Erfindung liegt die Aufgabe zur Schaffung einer Dosiervorrichtung zugrunde, mit der empfindliche Materialien schonend dosiert werden können.

Diese Aufgabe wird durch eine Dosiervorrichtung mit den Merkmalen des Anspruchs 1 gelöst.

Der Erfindung liegt des Weiteren die Aufgabe zugrunde, ein Verfahren zur schonenden Dosierung empfindlicher Materialien anzugeben.

Diese Aufgabe wird durch ein Verfahren mit den Merkmalen des Anspruchs 6 gelöst.

Nach der Erfindung ist vorgesehen, dass die Dosiervorrichtung einen Dosierkanal mit einem geschlossenen Querschnitt sowie einen Drehantrieb umfasst, wobei der Dosierkanal in Form einer Schraube mit einer vertikalen Längsachse gewunden ist, und wobei der Drehantrieb für eine schwingende Drehbewegung des Dosierkanals um dessen vertikale Längsachse ausgelegt ist. Im zugehörigen erfindungsgemäßen Verfahren wird das rieselfähige Material dem Dosierkanal zugeführt. Der Dosierkanal wird daraufhin in eine schwingende Drehbewegung mit einzelnen Drehhüben versetzt, wobei mit jedem Drehhub eine Teilmenge des rieselfähigen Materials aus einer unteren Austrittsöffnung des Dosierkanals herausfällt.

Die Erfindung beruht zunächst auf der Erkenntnis, dass sowohl bei herkömmlichen Schneckendosieren als auch bei herkömmlichen Schieberdosierem das zu dosierende Material einer Scherbelastung ausgesetzt wird. Es kommt dabei zu scherenden Relativbewegungen gegenüber der umgebenden Gehäusewand mit der Folge von Abrieb, Staubentwicklung und Qualitätsverlust.

Dem gegenüber unterbleibt bei der Erfindung eine solche Scherbelastung: Der Dosierkanal mit seinem geschlossenen Querschnitt wird in seiner Gesamtheit in eine schwingende Drehbewegung gesetzt, ohne dass Einzelteile davon eine gegenseitige Verschiebung erfahren.

Vielmehr funktioniert die Erfindung nach folgendem Prinzip: Zunächst ist festzuhalten, dass als "schwingende Drehbewegung" im Sinne der Erfindung eine Drehbewegung mit in ihrer Richtung wechselnden Beschleunigungen und mit einer zwischenliegenden beschleunigungsfreien Phase ist. In der beschleunigungsfreien Phase liegt das zu dosierende Material in Folge seiner Gewichtskraft auf der schrägen Bodenfläche des schraubenförmigen Dosierkanals auf, ohne dabei nach unten durchzurutschen. Bei einer Drehbeschleunigung gegen die Steigung des Dosierkanals wird die Andruckkraft des Materials an den Boden vergrößert, so dass weiterhin ein Durchrutschen unterbleibt. Bei der Drehbeschleunigung in Gegenrichtung allerdings verringert sich die Andruckkraft, was zu einer Auflockerung des Pulvers führt.

In dieser hier als negative Beschleunigung bezeichneten Phase werden bei ausreichender Beschleunigungsamplitude die inneren Haftkräfte aufgrund der genannten Auflockerung, ggf. aufgrund einer herbeigeführten Fluidisierung temporär überwunden, so dass das zu dosierende Material nicht der rückwärtigen Drehbewegung des Dosierkanals folgt, sondern nach unten durchrutscht und aus der unteren Austrittsöffnung des Dosierkanals austritt. Kanalquerschnitt, Ein- und Ausgangsquerschnitt, Beschleunigungsamplitude und Schwingfrequenz können ohne weiteres an die Pulvereigenschaften derart angepasst werden, dass mit jedem Drehhub bei negativer Beschleunigung eine bestimmte, vorgegebene Menge des Materials aus der Austrittsöffnung austritt, wodurch eine präzise Dosierung hervorgerufen wird. Dieser Vorgang ist allein auf die Drehschwingbeschleunigung zurückzuführen, ohne dass mechanische Relativbewegungen einzelner Bauteile im unmittelbaren Einflussbereich des zu dosierenden Materials eine Rolle spielen. Materialabrieb, Staubentwicklung und dergleichen ist auf ein Minimum reduziert, so dass insbesondere in dieser Hinsicht empfindliche Materialien wie Granulate, geschmackmaskierte Pulver, Mikrotabletten oder dergleichen schonend und ohne Qualitätsverlust dosiert werden können. Dies geht auch mit einer verringerten Umgebungsbelastung durch freigesetzten Staub oder dergleichen einher, was für die Verarbeitung von hochwirksamen, möglicherweise auch toxischen Stoffen von Vorteil ist und den Einsatz in geschlossenen Containment-Systemen erleichtert. Kleinere unvermeidliche Staubmengen werden durch den geschlossenen Kanalquerschnitt zuverlässig zurückgehalten. Der damit einhergehende Reinigungsaufwand ist auf ein Minimum reduziert.

Insbesondere aufgrund der geschlossenen Bauform kann mit der erfindungsgemäßen Dosiervorrichtung leicht und sparsam auch unter Schutzgas oder Ähnlichem dosiert bzw. gefördert werden. Außerdem können vergleichsweise große Kanalquerschnitte realisiert und folglich große Förder- bzw. Dosierleistungen erzielt werden. Damit ist der Einsatz nicht nur auf das Dosieren unmittelbar in einen Zielbehälter hinein beschränkt. Vielmehr kann die erfindungsgemäße Dosiervorrichtung beispielsweise auch als vorgelagertes Zuführsystem für ein Dosiersystem genutzt werden.

Es kann zweckmäßig sein, den Dosierkanal als schraubenförmig gewundenes Rohr oder dergleichen auszuführen. In bevorzugter Weiterbildung der Erfindung ist er in Form eines Kerns, einer um den Kern umlaufenden Schnecke und eines den Kern und die Schnecke umschließenden Mantels ausgebildet, wobei der Kern, die Schnecke und der Mantel drehfest zu einer Dreheinheit miteinander verbunden sind. Hierdurch können vergleichsweise große Kanalquerschnitte in einer kompakten Bauform realisiert werden, welche neben einem reproduzierbaren Förderverhalten außerdem eine gute Zugänglichkeit beispielsweise für Reinigungszwecke bietet.

Insbesondere im Hinblick auf den letzten Aspekt kann es zweckmäßig sein, dass der Dosierkanal einen Mantel aufweist, welcher zumindest teilweise zu öffnen oder zu demontieren ist. Im geöffneten bzw. demontierten Zustand ist eine gute Zugänglichkeit derart gewährleistet, dass eine Reinigung auch unter erschwerten Bedingungen beispielsweise innerhalb eines Containment-Systems möglich ist. Im geschlossenen bzw. montierten Zustand ist jedoch weiterhin eine drehfeste Einheit gebildet, welche unter Vermeidung von Relativbewegungen das zu dosierende Material beim Fördervorgang schont.

Es kann zweckmäßig sein, den Dosierkanal um einen festen Nullpunkt schwingen zu lassen. Bevorzugt ist jedoch ein Drehantrieb vorgesehen, welcher in nur einer Drehrichtung wirkt. Hierbei kommt der Dosierkanal nach jedem Drehhub in einer anderen Winkelstellung zur Ruhe. Insbesondere in Verbindung mit einer exzentrisch zur Längsachse positionierten Austrittsöffnung des Dosierkanals können einzelne Teilmengen des zu dosierenden Materials sequenziell an unterschiedlichen Orten ausgestoßen werden, was die Befüllung von mehreren ringförmig unter der Dosiervorrichtung positionierten Zielbehältern mit dosierten Teilmengen ermöglicht.

Je nach Fließverhalten des zu fördernden Materials kann es zweckmäßig sein, die erfindungsgemäße Dosiervorrichtung derart zu betreiben, dass der Querschnitt des Dosierkanals nur teilweise gefüllt ist. Dies erlaubt die ausreichende Auflockerung, ggf. Fluidisierung selbst von schlecht fließfähigen Materialien. Alternativ kann es aber auch zweckmäßig sein, den Querschnitt des Dosierkanals vollständig zu füllen. Schwankungen in der Füllstandshöhe innerhalb des Dosierkanals sind ausgeschlossen, was der Dosiergenauigkeit zugute kommen kann.

Ausführungsbeispiele der Erfindung sind nachfolgend anhand der Zeichnung näher beschrieben. Es zeigen:
- Fig. 1: in einer schematischen Längsschnittdarstellung ein erstes Ausführungsbeispiel der erfindungsgemäßen Dosiervorrichtung mit einem Dosierkanal in Form einer zweigängigen Schnecke mit einer zentrischen Austrittsöffnung,
- Fig. 2: eine Variante der Anordnung nach Fig. 1 mit einer teilgefüllten eingängigen Schnecke und mit einer exzentrischen Austrittsöffnung,
- Fig. 3: in einer Querschnittsdarstellung die Dosiervorrichtung nach Fig. 1 mit Einzelheiten zu ihrem geschlossenen Mantel und der schrittweise schwingenden Drehbewegung,
- Fig. 4: die Anordnung nach Fig. 3 bei für Reinigungszwecke teilweise geöffnetem Mantel.

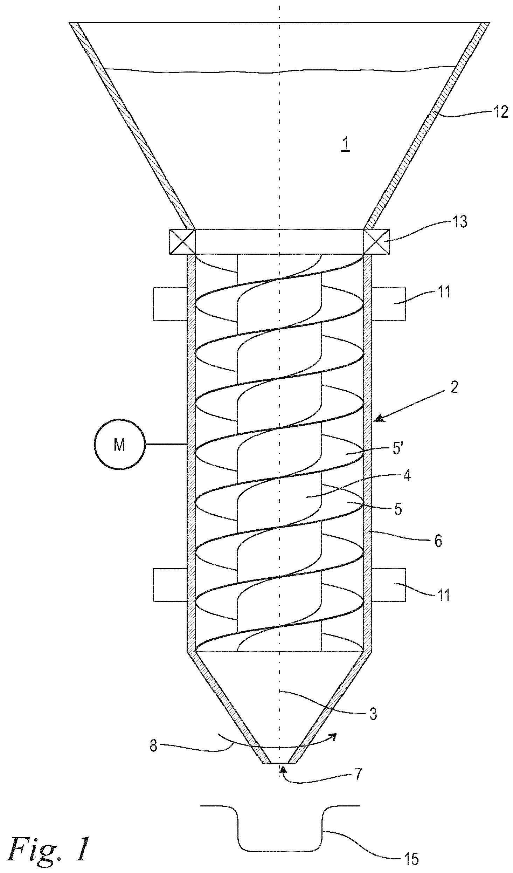

Fig. 1 zeigt in einer schematischen Längsschnittdarstellung ein erstes Ausführungsbeispiel der erfindungsgemäßen Dosiervorrichtung für rieselfähiges Material 1, welches beispielhaft in einem Trichter 12 bereitgehalten wird. Das rieselfähige Material 1 ist hier ein pharmazeutisches Pulver. Es kann sich aber auch um Granulat, Mikrotabletten oder dergleichen aus dem Pharmabereich, aus dem Bereich der Nahrungsergänzungsmittel oder aus beliebigen anderen Bereichen handeln.

Die Dosiervorrichtung umfasst einen Dosierkanal 2, der sich entlang einer vertikal in Gewichtskraftrichtung verlaufenden Längsachse 3 erstreckt, sowie einen Drehantrieb M für eine schwingende Drehbewegung des Dosierkanals 2 um die Längsachse 3. Im gezeigten Ausführungsbeispiel ist der Dosierkanal durch einen zylindrischen Kern 4, durch mindestens eine um den Kern 4 umlaufende Schnecke 5 und durch einen den Kern 4 und die Schnecke 5 umschließenden Mantel 6 gebildet, wobei hier zwei Schnecken 5, 5' entsprechend einem zweigängigen Gewinde angeordnet sind. Der Kern 4, die beiden Schnecken 5, 5' und der Mantel 6 sind drehfest zu einer Dreheinheit miteinander verbunden. Folglich entsteht hier ein zweigängig in Form einer Schraube um die vertikale Längsachse gewundener Kanal mit geschlossenem Querschnitt. Der Dosierkanal 2 ist in seiner Gesamtheit einschließlich des Kerns 4, der Schnecken 5, 5' und des Mantels 6 in Lagern 11 aufrecht stehend um die vertikale Längsachse 3 drehbar gelagert. Der Trichter 12 steht fest, dreht sich also nicht mit dem Dosierkanal 2 mit. Zwischen beiden befindet sich eine Dichtung 13. Es kann aber auch eine mitdrehende Ausführung des Trichters 12 zweckmäßig sein. Jedenfalls ist sichergestellt, dass das rieselfähige Material 1 verlustfrei aus dem Trichter in den Dosierkanal 2 gelangt.

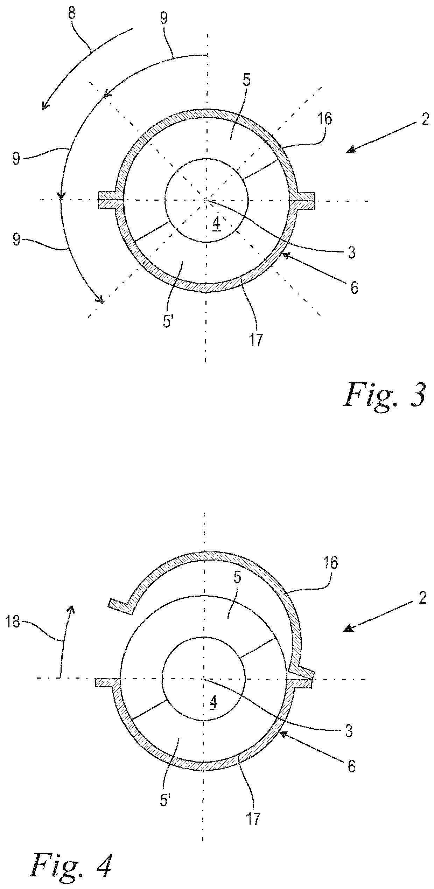

Im Ausführungsbeispiel nach Fig. 1 weist der Dosierkanal 2 an seinem in Gewichtskraftrichtung unteren Ende eine zentrisch auf der Längsachse 3 liegende Austrittsöffnung 7 auf, unterhalb derer eine Zielkavität 15 positioniert wird. Die Zielkavität 15 kann ein Napf, ein Blister, eine Steckkapsel oder dergleichen sein. Es kommen aber auch beliebige andere Zielbehälter in Betracht. Im Betrieb wird der Dosierkanal 2 mittels des Drehantriebs M in eine schwingende Drehbewegung gesetzt. Bei dem hier nur schematisch angedeuteten Drehantrieb M kann es sich um einen Elektromotor mit Kurbeltrieb oder Kulissentrieb handeln. Für eine gesteuerte Drehbewegung kann aber auch ein Schrittmotor, ein Servomotor oder dergleichen zum Einsatz kommen. Die schwingende Drehbewegung kann um einen feststehenden Nullpunkt erfolgen. Im gezeigten Ausführungsbeispiel wird eine schwingende, jedoch fortschreitende Drehbewegung in nur einer Drehrichtung 8 erzeugt. Weitere Einzelheiten hierzu sind im Zusammenhang mit Fig. 3 näher beschrieben.

Im Betriebsmodus nach Fig. 1 ist der freie Querschnitt des zweigängigen Dosierkanals 2 vollständig mit dem rieselfähigen Material 1 befüllt. Die Geometrie der Anordnung ist auf das Fließverhalten des rieselfähigen Materials 1 derart abgestimmt, dass es ohne Drehbewegung bzw. ohne Drehbeschleunigung an Ort und Stelle im Dosierkanal 2 verbleibt. Bei einer Drehbeschleunigung in der mit der Steigung der Schnecken 5, 5' mitlaufenden Drehrichtung 8 lockert sich die Materialfüllung des Dosierkanals 2 auf, was zu einem temporären Fließen des zu dosierenden Materials 1 innerhalb des Dosierkanals 2 führt. Da die genannte Drehbeschleunigung aufgrund der schwingenden Bewegung zeitlich exakt begrenzt ist, ist auch die Auflockerung zeitlich in gleicher Weise exakt begrenzt, so dass über diese zeitliche Steuerung eine korrespondierend bemessene Teilmenge des Materials 1 zur Austrittsöffnung 7 gelangt und von dort in die Zielkavität 15 fällt.

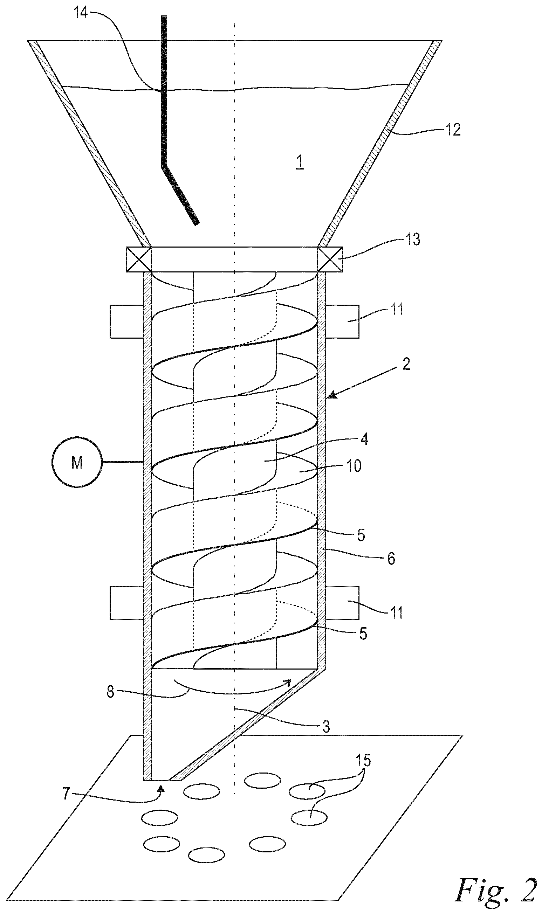

Fig. 2 zeigt in einer schematischen Längsschnittdarstellung eine Variante der Dosiervorrichtung nach Fig. 1. Hier ist nur eine Schnecke 5 zur Bildung eines eingängig schraubenförmig gewundenen Dosierkanals 2 vorgesehen. Außerdem ist die Austrittsöffnung 7 exzentrisch zur Längsachse 3 positioniert. Im Trichter 12 befindet sich noch ein optionaler Rührer 14 zur Auflockerung und Vergleichmäßigung des rieselfähigen Materials 1, wodurch dessen Eintritt in den Dosierkanal 2 erleichtert wird.

Eine erste Abweichung im Betriebsverfahren von demjenigen nach Fig. 1 besteht darin, dass hier der Querschnitt des Dosierkanals 2 nur teilweise mit dem rieselfähigen Material 1 unter Bildung einer freien Oberfläche 10 gefüllt wird. Eine weitere Abweichung im Betriebsverfahren besteht darin, dass hier mehrere Zielkavitäten 15 unterhalb des Dosierkanals 2 ringförmig um die Längsachse 3 positioniert sind und dabei im gleichen Radius dazu wie die Austrittsöffnung 7 liegen. Über einzelne, im Zusammenhang mit Fig. 3 näher beschriebene Drehhübe 9 in der Drehrichtung 8 können die einzelnen Zielkavitäten 15 mit der Austrittsöffnung 7 angefahren werden, so dass hier entsprechend dosierte Teilmengen des rieselfähigen Materials 1 hineinfallen.

In den übrigen Merkmalen und Bezugszeichen stimmt das Ausführungsbeispiel nach Fig. 2 mit demjenigen nach Fig. 1 überein. Die als abweichend beschriebenen Merkmale können einzeln und wechselseitig in der jeweils anderen Ausführungsform zum Einsatz kommen. So ist es beispielsweise möglich, auch den exzentrischen Dosierkanal 2 nach Fig. 2 mehrgängig auszuführen bzw. mit einem vollständig befüllten Kanalquerschnitt zu betreiben. Umgekehrt ist es möglich, auch die zentrische Ausgestaltung nach Fig. 1 mit nur einem eingängig gewundenen Dosierkanal 2 zu versehen und/oder diesen nur teilweise befüllt zu betreiben.

Fig. 3 zeigt in einer Querschnittsdarstellung die Anordnung nach Fig. 1 mit dem Kern 4, den beiden um den Kern 4 gewundenen Schnecken 5, 5' sowie mit dem äußeren Mantel 6. Der Mantel 6 ist hier durch zwei lösbar miteinander verbundene halbschalenförmige Mantelteile 16, 17 gebildet. Gleiches gilt für die Ausführung nach Fig. 2 mit nur einer Schnecke 5.

Der im Zusammenhang mit den Fig. 1 und 2 beschriebene Drehantrieb M wirkt hier in nur einer Drehrichtung 8 derart, dass der Dosierkanal 2 einerseits eine um die Längsachse 3 schwingende Drehbewegung ausführt, und dabei andererseits mit jeder Drehschwingung einen Drehhub 9 in der Drehrichtung 8 ausführt. Mit anderen Worten befindet sich der Dosierkanal 2 zunächst in Ruhe, wird dann in der Drehrichtung 8 beschleunigt und schließlich bei Erreichung der nächsten Drehwinkelposition auf null abgebremst. Die Beschleunigung bzw. die Abbremsung bewirken die zuvor beschriebene Auflockerung des Materials 1 (Fig. 1, 2) und damit den Austritt einer dosierten Teilmenge aus der Austrittsöffnung 7 (Fig. 1, 2). Der jeweilige Drehhub 9 und die jeweiligen Stopppositionen sind auf die Positionen der Zielkavitäten 15 abgestimmt, so dass das austretende Material 1 dort hinein gelangt. Drehrichtung 8 und Drehhub 9 können bei gleicher Steigungsrichtung der Schnecke 5 auch in der Richtung entgegengesetzt zur Darstellung nach Fig. 3 gewählt werden. In diesem Fall bewirkt die Verzögerung am Ende eines jeden Drehhubes 9 in Form einer negativen Beschleunigung die vorstehend beschriebene Auflockerung des Materials 1 und damit dessen temporäre Förderung.

Fig. 4 zeigt die Anordnung nach Fig. 3, wobei das eine Mantelteil 16 vom anderen Mantelteil 17 gelöst und entsprechend einem Pfeil 18 aufgeschwenkt ist. Hierdurch wird das Innere des Dosierkanals 2 für Reinigungszwecke frei zugänglich. Das verbleibende Mantelteil 17 kann fest mit den Schnecken 5, 5' verbunden bleiben. Anstelle einer scharnierartigen Aufschwenkung des Mantelteils 16 kann auch eine vollständige Abnahme zweckmäßig sein. Ebenfalls ist es eine Option, beide Mantelteile 16, 17 für Reinigungszwecke abzunehmen. Für den Betrieb werden jedoch beide Mantelteile 16,

17 in die geschlossene Position nach Fig. 3 gebracht, wobei sie zusammen mit den Schnecken 5, 5' und dem Kern 4 eine drehfeste Einheit des Dosierkanals 2 mit geschlossenem Kanalquerschnitt bilden.

## Patentansprüche

1. Dosiervorrichtung für rieselfähiges Material (1), insbesondere für pharmazeutisches Pulver, Granulat, Mikrotabletten und dergleichen, umfassend einen Dosierkanal (2) mit einem geschlossenen Querschnitt, des Weiteren umfassend einen Drehantrieb (M), wobei der Dosierkanal (2) in Form einer Schraube mit einer vertikalen Längsachse (3) gewunden ist, und wobei der Drehantrieb (M) für eine schwingende Drehbewegung des Dosierkanals (2) um dessen Längsachse (3) ausgelegt ist.

2. Dosiervorrichtung nach Anspruch 1,
**dadurch gekennzeichnet, dass** der Dosierkanal (2) in Form eines Kerns (4), einer um den Kern (4) umlaufenden Schnecke (5) und eines den Kern (4) und die Schnecke (5) umschließenden Mantels (6) ausgebildet ist, wobei der Kern (4), die Schnecke (5) und der Mantel (6) drehfest zu einer Dreheinheit miteinander verbunden sind.

3. Dosiervorrichtung nach Anspruch 1 oder 2,
**dadurch gekennzeichnet, dass** der Drehantrieb (M) in nur eine Drehrichtung (8) wirkt.

4. Dosiervorrichtung nach einem der Ansprüche 1 bis 3,
**dadurch gekennzeichnet, dass** der Dosierkanal (2) eine Austrittsöffnung (7) aufweist, welche exzentrisch zur Längsachse (3) positioniert ist, und dass der Drehantrieb (M) zur Ausführung eines Drehhubes (9) derart ausgelegt ist, dass die Austrittsöffnung (7) nach jedem Drehhub (9) in einer anderen Winkel stellung positioniert ist.

5. Dosiervorrichtung nach einem der Ansprüche 1 bis 4,
**dadurch gekennzeichnet, dass** der Dosierkanal (2) einen Mantel (6) aufweist, welcher zumindest teilweise zu öffnen oder zu demontieren ist.

6. Verfahren zum Betrieb einer Dosiervorrichtung nach einem der Ansprüche 1 bis 5, umfassend folgende Verfahrensschritte:
- Das rieselfähige Material (1) wird dem Dosierkanal (2) zugeführt;
- der Dosierkanal (2) wird in eine schwingende Drehbewegung mit einzelnen Drehhüben (9) versetzt, wobei mit jedem Drehhub (9) eine Teilmenge des rieselfähigen Materials (1) aus einer unteren Austrittsöffnung (7) des Dosierkanals (2) herausfällt.

7. Verfahren nach Anspruch 6,
**dadurch gekennzeichnet, dass** die Austrittsöffnung (7) exzentrisch zur Längsachse (3) des Dosierkanals (2) positioniert ist, und dass der Dosierkanal (2) in Drehhüben (9) derart bewegt wird, dass die Austrittsöffnung (7) nach jedem Drehhub (9) in einer anderen Winkelstellung positioniert ist.

8. Verfahren nach Anspruch 6 oder 7,
**dadurch gekennzeichnet, dass** der Querschnitt des Dosierkanals (2) nur teilweise mit dem rieselfähigen Material (1) befüllt wird.

9. Verfahren nach Anspruch 6 oder 7,
**dadurch gekennzeichnet, dass** der Querschnitt des Dosierkanals (2) vollständig mit dem rieselfähigen Material (1) befüllt wird.
